# EUROPEAN PATENT APPLICATION

(11) **EP 2 149 478 A2**
(43) Date of publication of application: **03.02.2010**
(21) Application number: 09163095.4
(22) Date of filing: 18.06.2009
(51) Int. Cl.: B60R 21/015

(54) **Apparatus for allowing or suppressing deployment of a low risk deployment airbag**

(30) Priority: 31.07.2008 US 221205
(71) Applicant: Delphi Technologies, Inc., Troy, Michigan 48007 (US)
(72) Inventor: Gray, Charles A., Noblesville, IN 46060 (US); Hanson, Lisa A., Carmel, IN 46032 (US); Murphy, Morgan D., Kokomo, IN 46901 (US); Hawes, Kevin J., Greentown, IN 46936 (US); Fischer, Thomas, 57482, Wenden (DE)
(74) Representative: Denton, Michael John

(57) **Abstract**

A low-cost automatic suppression apparatus allows or suppresses deployment of a low risk deployment airbag based solely on occupant seat load and seat belt tension. The seat load and belt tension parameters are detected by low-cost sensors (22,30), and an airbag control unit (34) suppresses airbag deployment when the occupant load is below a specified load threshold or the belt tension is above a specified tension threshold, and otherwise allows airbag deployment. The sensors are preferably switch-based so that the signals provided to the airbag control unit are in the form of a differential electrical current, and only two wires are needed to interface each sensor to the airbag control unit.

## Description

### TECHNICAL FIELD

The present invention relates to automatic suppression of airbag deployment, and more particularly to an apparatus for determining the suppression status of a low risk deployment airbag based on detected occupant load and seat belt tension.

### BACKGROUND OF THE INVENTION

Automatic suppression systems have primarily been used in connection with conventional airbags to minimize the risk of deployment-related injuries to out-of-position occupants and small children, especially infants in rear-facing infant seats. In general, the approach has been to gather sufficient information to be able to both detect and characterize seat occupants, and to allow or suppress deployment based on the occupant characterization. However, the automatic suppression function is less critical in vehicles equipped with low risk deployment airbags that have been designed to minimize deployment-related injuries to out-of-position occupants and small children, and significant effort has been expended to scale back both the cost and complexity of automatic suppression systems for such vehicles. Accordingly, what is needed is an effective but low-cost automatic suppression system suitable for use in connection with low risk deployment airbags.

### SUMMARY OF THE INVENTION

The present invention is directed to a low-cost apparatus for allowing or suppressing deployment of a low risk deployment airbag based solely on occupant seat load and seat belt tension. Seat load and belt tension measurements are obtained from low-cost sensors; and an airbag control unit suppresses airbag deployment when the occupant load is below a specified load threshold or the belt tension is above a specified tension threshold, and otherwise allows airbag deployment. The sensors are preferably switch-based so that the signals provided to the airbag control unit are in the form of differential electrical currents, and only two wires are needed to interface each sensor to the airbag control unit. Alternately, the sensor signals can be provided to the airbag control unit in the form of differential electrical voltages; in this case, three wires are needed to interface each sensor to the airbag control unit.

### BRIEF DESCRIPTION OF THE DRAWINGS

FIG. 1 is an illustration of a vehicle seat with seat load and belt tension sensors;

FIG. 2 is a block diagram of an automatic suppression apparatus according to a first embodiment of this invention, including an airbag control unit having a microprocessor-based signal processor;

FIG. 3 is a block diagram of an automatic suppression apparatus according to a second embodiment of this invention, including an airbag control unit having a microprocessor-based signal processor; and

FIG. 4 is a logic flow diagram representative of a software routine executed by the signal processors of FIGS. 2-3 according to this invention.

### DESCRIPTION OF THE PREFERRED EMBODIMENT

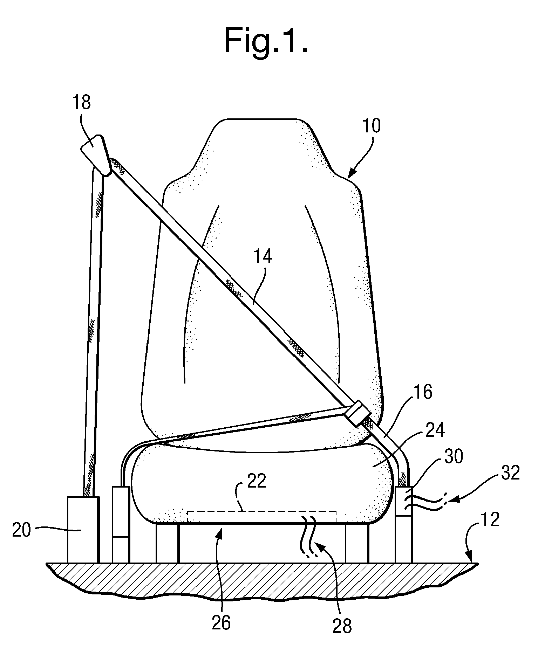

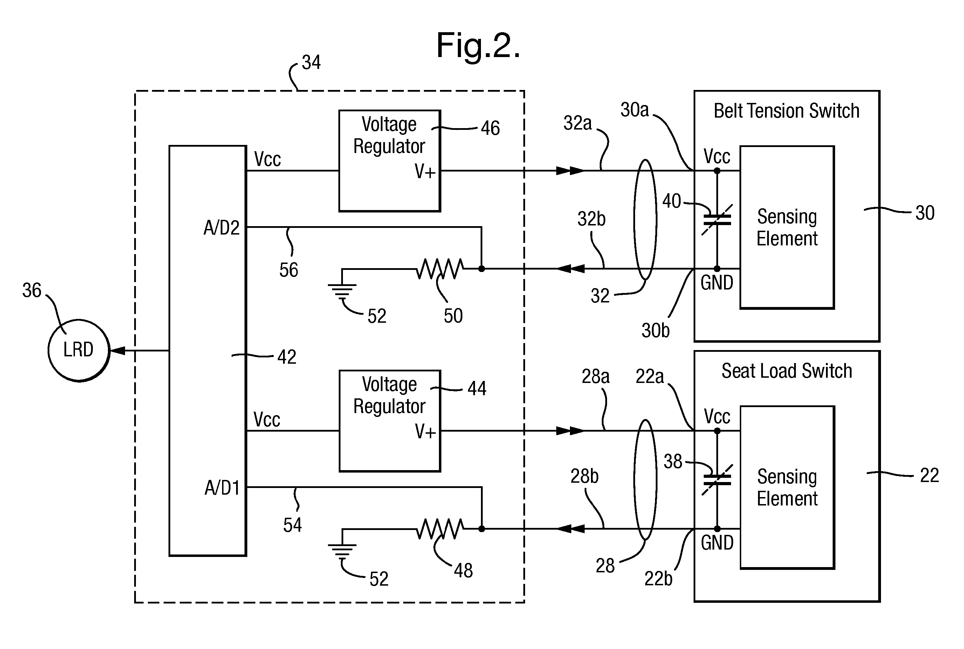

Referring to the drawings, and particularly to FIG. 1, the reference numeral 10 generally designates a front passenger seat of a vehicle. The seat 10 is anchored to the passenger compartment floor 12, as are the lap end of seat belt 14 and the buckle receptacle 16. The shoulder end of seat belt 14 is routed through a hangar 18 and into a floor-mounted retractor mechanism 20, per conventional practice. A seat load sensor 22 disposed between the bottom cushion 24 and frame 26 is responsive to occupant weight applied to cushion 24, and provides a load-related electrical output signal via the wire pair 28. A belt tension sensor 30 disposed in the buckle receptacle 16 is responsive to the tension applied to seat belt 14, and provides a tension-related electrical output signal via the wire pair 32. As shown in FIGS. 2-3, the load-related and tension related output signals on wire pairs 28 and 32 are supplied to an airbag control unit (ACU) 34 that controls deployment of at least one low risk deployment airbag 36 for protection of the seat occupant during a sufficiently severe crash event.

The illustrated placement of the sensors 22 and 30 in FIG. 1 is typical, but not necessarily dictated by this invention. For example, the seat load sensor 22 may be located on the top surface of cushion 24, in cushion 24, or integrated into the seat frame 26; and the belt tension sensor 30 may be located in the retractor mechanism 20 or integrated into the belt 14. In a similar manner, the particular structure and sensing technology of the sensors 22 and 30 are not necessarily dictated by this invention. For example, the seat load sensor 22 may include a sensing element responsive to pressure, flexure, deflection or strain; and the belt tension sensor 30 may include a strain gauge or a magnetic flux responsive sensing element. However, sensor cost is an important consideration, and the sensors 22 and 30 are preferably configured as switch elements so that the detected load or tension information can be conveyed to the airbag control unit 34 with only two wires per sensor. Minimizing the number of wires in the wiring harness for airbag control unit 34 serves to minimize component cost and to reduce the required connector insertion force.

FIG. 2 illustrates a first and preferred embodiment of the present invention in which the sensors 22 and 30 are both configured as switch elements (as signified by the contacts 38 and 40) so that the load-related and tension-related output signals are supplied to airbag control unit 34 via the wire pairs 28 and 32, respectively. Thus, the sensors 22 and 30 are calibrated to change output states (with suitable hysteresis) at specified seat load and tension thresholds. For example, the seat load sensor 22 may be calibrated so that its output state is effectively open when the weight applied to seat cushion 24 exceeds 21 kilograms (46 pounds), and effectively closed when the weight applied to cushion 24 is less than 19 kilograms (42 pounds). In this case, airbag control unit 34 interprets the open state of sensor 22 as SEAT_LOAD = HIGH, and the closed state of sensor 22 as SEAT_LOAD = LOW. Similarly, the belt tension sensor 30 may be calibrated so that its output state is effectively open when the tension in seat belt 14 exceeds 5.5 kilograms (12 pounds), and effectively closed when the tension in seat belt 14 is less than 4.5 kilograms (10 pounds). In this case, airbag control unit 34 interprets the open state of sensor 30 as BELT_TENSION = LOW, and the closed state of sensor 30 as BELT_TENSION = HIGH.

In the embodiment of FIG. 2, the airbag control unit (ACU) 34 includes a signal processor 42 (a microprocessor or digital signal processor, for example), first and second voltage regulators 44 and 46, and first and second shunt resistors 48 and 50. The voltage regulator 44 receives a supply voltage Vcc from signal processor 42, and supplies a logic-level switch voltage V+ to the power terminal 22a of sensor 22 via one wire 28a of the wire pair 28. Similarly, voltage regulator 46 receives a supply voltage Vcc from signal processor 42, and supplies a logic-level switch voltage V+ to power terminal 30a of sensor 30 via one wire 32a of the wire pair 32. The signal terminal 22b of sensor 22 is coupled to ACU ground voltage 52 through the shunt resistor 48, and the signal terminal 30b of sensor 30 is coupled to ACU ground voltage 52 through the shunt resistor 50. The high-side voltage of shunt resistor 48 is supplied to a first analog input port (A/D1) of signal processor 42 via line 54, and the high-side voltage of shunt resistor 50 is supplied to a second analog input port (A/D2) of signal processor 42 via line 56. The load-related and tension-related output signals of sensors 22 and 30 may thus be viewed as differential current signals because the current through the respective shunt resistors 48, 50 (and hence, the voltage supplied to the respective input ports A/D1, A/D2) has one of two different values or levels depending on the logic state of the switch-based sensor 22, 30. And as indicated above, signal processor 42 may interpret the two levels as LOW or HIGH levels of the sensed parameter.

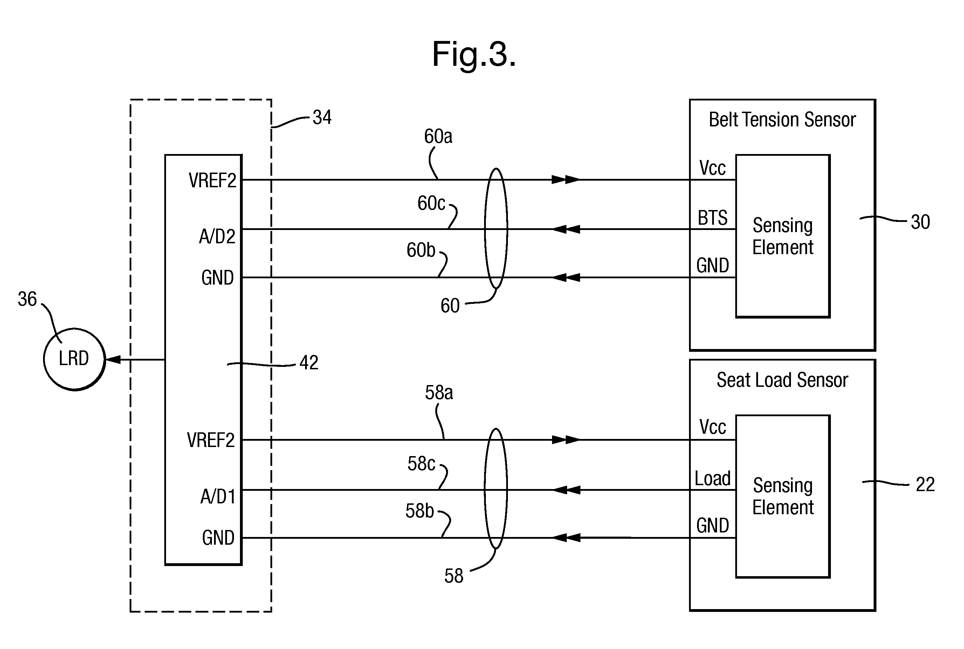

FIG. 3 illustrates a second embodiment of the present invention in which the sensors 22 and 30 are both configured to provide continuously variable output signals instead of switched output signals. In this case, the airbag control unit signal processor 42 is programmed to determine if the sensed parameters have HIGH or LOW values for purposes of determining the suppression status of LRD airbag 36.

Referring to FIG. 3, the sensors 22 and 30 are each coupled to processor 42 via a set 58, 60 of three-wires. In respect to seat load sensor 22, processor 42 provides reference and ground voltages via wires 58a and 58b, and sensor 22 supplies an output signal (LOAD) to the first analog input port (A/D1) of processor 42 via wire 58c. Similarly, processor 42 provides reference and ground voltages to sensor 30 via wires 60a and 60b, and sensor 30 supplies an output signal (BTS) to the second analog input port (A/D2) of processor 42 via wire 60c. In this case, the sensor output voltage can be viewed as a differential voltage with respect to the supplied ground voltage, and processor 42 characterizes the signal levels as HIGH or LOW by comparing the signals to calibrated thresholds. In other words, processor 42 sets SEAT_LOAD = LOW when the differential output voltage of seat load sensor 22 is less than a calibrated load threshold, and SEAT_LOAD = HIGH when the differential output voltage of seat load sensor 22 is above the calibrated load threshold (neglecting hystersis). Similarly, processor 42 sets BELT_TENSION = LOW when the differential output voltage of belt tension sensor 30 is less than a calibrated tension threshold, and BELT_TENSION = HIGH when the differential output voltage of belt tension sensor 30 is above the calibrated tension threshold (again, neglecting hystersis).

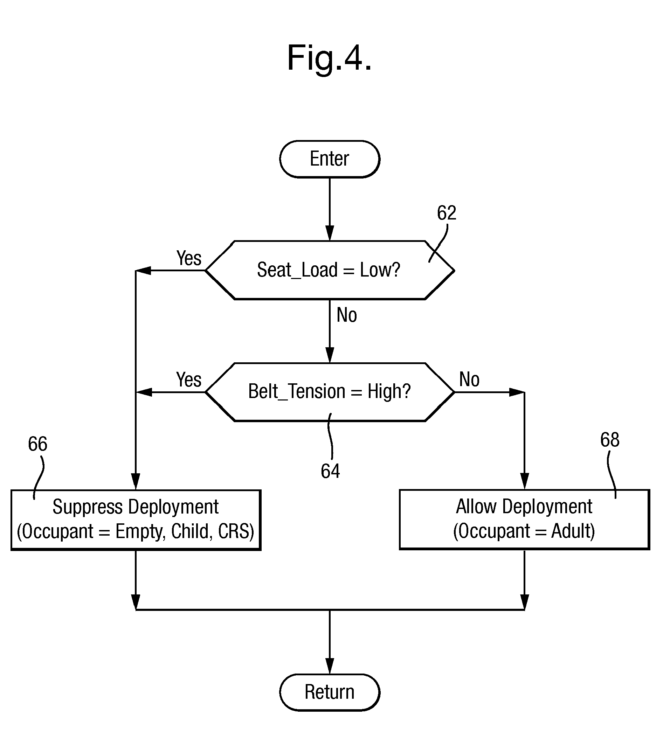

The flow diagram of FIG. 4 represents a software routine executed by the processor 42 of airbag controller 34 for determining the appropriate suppression status for LRD airbag 36. The routine may be periodically executed, or executed in response to detected changes in the operating status of the vehicle such as changes in ignition switch position or the status of a door closure switch. In any event, blocks 62 and 64 check the status of SEAT_LOAD and BELT_TENSION. If SEAT_LOAD = LOW or BELT_TENSION = HIGH, the seat 10 is empty, or occupied by a child or a child restraint seat (CRS), and block 66 is executed to suppress deployment of LRD airbag 36. Otherwise (that is, if both blocks 62 and 64 are answered in the negative), the seat 10 is occupied by an adult, and block 68 is executed to allow deployment of LRD airbag 36 in the event of a sufficiently severe crash event. This logic can alternatively be expressed by the logic statement:
IF (SEAT_LOAD = LOW) OR (BELT_TENSION = HIGH),
THEN OCCUPANT = EMPTY, CHILD OR CRS
ELSE OCCUPANT = ADULT.

In summary, the present invention provides an effective but low-cost automatic suppression system for a low risk deployment airbag. While the invention has been described with respect to the illustrated embodiments, it is recognized that numerous modifications and variations in addition to those mentioned herein will occur to those skilled in the art. For example, the sensor inputs can be supplied to an occupant sensing unit, which in turn supplies the determined suppression status to an airbag control unit, and so on. Accordingly, it is intended that the invention not be limited to the disclosed embodiment, but that it have the full scope permitted by the language of the following claims.

## Claims

1. Apparatus for selectively allowing or suppressing deployment of a low risk deployment airbag (36) for an occupant of a vehicle seat (10) having a bottom cushion (24) for supporting said occupant and a seat belt (14) for restraining said occupant, the apparatus comprising:
a load sensor (22) for detecting an occupant load applied to said bottom cushion (24), and producing a seat load signal;
a belt tension sensor (30) for detecting a tension applied to said seat belt (14), and producing a belt tension signal; and
an airbag control unit (34) for suppressing deployment of the low risk deployment airbag (36) when said seat load signal represents an occupant load below a specified load threshold or said belt tension signal represents a seat belt tension above a specified tension threshold, and otherwise allowing deployment of the low risk deployment airbag (36).

2. The apparatus of claim 1, where:
said load sensor (22) is configured as a switch (38) that changes state when the detected occupant load falls below or rises above said specified load threshold;
said airbag control unit (34) is coupled to said load sensor (22) via only two wires (28), and
said seat load signal is a differential current conducted by said two wires (28a,28b).

3. The apparatus of claim 1, where:
said belt tension sensor (30) is configured as a switch that changes state when the detected tension falls below or rises above said specified tension threshold;
said airbag control unit (34) is coupled to said belt tension sensor via only two wires (32); and
said belt tension signal is a differential current conducted by said two wires (32a,32b).

4. The apparatus of claim 1, where:
said load sensor (22) is configured such that said seat load signal varies continuously in relation to the detected occupant load; and
said airbag control unit (34) is coupled to said load sensor via three wires (58), and said seat load signal is a differential voltage between two of said three wires (58).

5. The apparatus of claim 1, where:
said belt tension sensor (30) is configured such that said belt tension signal varies continuously in relation to the detected tension; and
airbag control unit (34) is coupled to said belt tension sensor (30) via three wires (60), and said belt tension signal is a differential voltage between two of said three wires (60).
